# EUROPEAN PATENT APPLICATION

(11) **EP 3 893 292 A1**
(43) Date of publication of application: **13.10.2021**
(21) Application number: 19891743.7
(22) Date of filing: 06.12.2019
(51) Int. Cl.: H01M 4/13, H01M 4/133, H01M 4/36, H01M 4/38, H01M 4/48, H01M 10/0567

(54) **NONAQUEOUS ELECTROLYTIC SOLUTION SECONDARY BATTERY**

(30) Priority: 06.12.2018 JP 2018229156
(71) Applicant: Mitsubishi Chemical Corporation, Chiyoda-ku Tokyo 100-8251 (JP); MU Ionic Solutions Corporation, Tokyo 100-8251 (JP)
(72) Inventor: WATANABE, Aiko, Tokyo 100-8251 (JP); MARU, Naoto, Tokyo 100-8251 (JP)
(74) Representative: Hoffmann Eitle
(86) International application number: PCT/JP2019/047753
(87) International publication number: WO 2020/116601

(57) **Abstract**

Provided is a nonaqueous electrolytic solution secondary battery which has an excellent balance of cycle characteristics, output characteristics, and battery swelling. The nonaqueous electrolytic solution secondary battery includes a nonaqueous electrolytic solution, a negative electrode, and a positive electrode, and the negative electrode contains Si atoms. The nonaqueous electrolytic solution contains a nonaqueous solvent, a compound (1) represented by the following Formula (1), and an unsaturated bond-containing carbonate; the content of the compound (1) with respect to the whole nonaqueous electrolytic solution is 0.07% by mass to 15.0% by mass; the content of the unsaturated bond-containing carbonate with respect to the whole nonaqueous electrolytic solution is 0.2% by mass to 8.0% by mass; and, in the negative electrode, the ratio of an active substance (A) containing SiOx (0.5 ≤ x ≤ 1.6) with respect to all active substances is 9.0% by mass or lower. In Formula (1), R¹ to R³ each independently represent a hydrogen atom, or a hydrocarbon group having 1 to 10 carbon atoms which optionally has a halogen atom; at least one of R¹ to R³ is a halogen atom-containing alkyl group having 1 to 10 carbon atoms; and n represents 0 or 1.

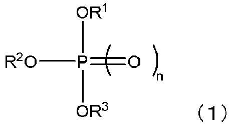

## Description

### TECHNICAL FIELD

The present invention relates to a nonaqueous electrolytic solution secondary battery. More particularly, the present invention relates to a nonaqueous electrolytic solution secondary battery which has an excellent balance of output characteristics and battery swelling while maintaining cycle characteristics.

### BACKGROUND ART

Nonaqueous electrolytic solution secondary batteries such as lithium secondary batteries have practically used in a wide range of applications including power sources of portable phones, laptop computers and the like, as well as vehicle-mounted power sources for driving automobiles and the like, and stationary large-sized power sources. In association with this, nonaqueous electrolytic solution secondary batteries are demanded to satisfy various battery properties, such as cycle characteristics, input-output characteristics, storage characteristics, continuous charging characteristics and safety, at high levels. Further, in recent years, vehicle-mounted batteries are increasingly demanded to have a higher capacity for an increase in the vehicle drivable distance.

In order to achieve an increase in the capacity, the use of an alloy-based active substance, particularly a Si atom-containing active substance, as a negative electrode active substance has been examined. For the purpose of improving the cycle characteristics of a nonaqueous electrolytic solution secondary battery in which a Si atom-containing active substance expected to have a high capacity is used as a negative electrode, it has been proposed to use an organophosphate compound as an additive of a nonaqueous electrolytic solution. For example, Patent Document 1 discloses a technology for improving the cycle characteristics by incorporating tris(2,2,2-trifluoroethyl) phosphate into a nonaqueous electrolytic solution. Patent Document 2 discloses a technology in which tris(2,2,2-trifluoroethyl) phosphate/phosphite is incorporated into a nonaqueous electrolytic solution and a graphite is used as a negative electrode.

### RELATED ART DOCUMENTS

### PATENT DOCUMENTS

[Patent Document 1] WO2016/063902
[Patent Document 2] Japanese Unexamined Patent Application Publication No. 2011-49152

### SUMMARY OF THE INVENTION

### PROBLEMS TO BE SOLVED BY THE INVENTION

According to the studies conducted by the present inventors, the above-described technology of Patent Document 1 was found to have a problem in that the improvement of the cycle characteristics is insufficient. Similarly, nonaqueous electrolytic solution secondary batteries in which a Si atom-containing active substance is used as a negative electrode generally have a problem in terms of their cycle characteristics, and the studies conducted by the present inventors found that it is a more difficult and more important problem to further improve the output characteristics and battery swelling while maintaining the cycle characteristics.

Meanwhile, in Patent Document 2, although it is described that a Si atom-containing active substance can be used as a negative electrode, this is not specifically evaluated or verified; therefore, a further improvement of battery swelling combined with maintenance of the cycle characteristics, which is important in the case of using a Si-atom containing active substance, is neither recognized as a problem nor examined specifically.

In other words, an object of the present invention is to provide a nonaqueous secondary battery containing Si atoms in its negative electrode, in which the output characteristics and battery swelling are improved while maintaining the cycle characteristics.

### MEANS FOR SOLVING THE PROBLEMS

The present inventors intensively studied to solve the above-described problems and consequently discovered that the problems can be solved by a nonaqueous electrolytic solution secondary battery which includes a negative electrode containing a Si atom-containing active substance, wherein a nonaqueous electrolytic solution contains an organophosphate compound and an unsaturated bond-containing carbonate each in a specific amount, the negative electrode contains a SiOx-containing active substance, and the content of the SiOx-containing active substance is not greater than a specific amount. That is, the present invention provides the following modes.
[1] A nonaqueous electrolytic solution secondary battery including: a nonaqueous electrolytic solution; a negative electrode, and a positive electrode,
   wherein, the negative electrode contains Si atoms; the nonaqueous electrolytic solution contains a nonaqueous solvent, a compound (1) represented by the following Formula (1), and an unsaturated bond-containing carbonate; the content of the compound (1) with respect to the whole nonaqueous electrolytic solution is 0.07% by mass to 15.0% by mass; the content of the unsaturated bond-containing carbonate with respect to the whole nonaqueous electrolytic solution is 0.2% by mass to 8.0% by mass; and, in the negative electrode, the ratio of an active substance (A) containing SiOx (0.5 ≤ x ≤ 1.6) with respect to all active substances is 9.0% by mass or lower: 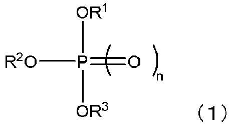 wherein, R¹ to R³ each independently represent a hydrogen atom, or a hydrocarbon group having 1 to 10 carbon atoms which optionally has a halogen atom; at least one of R¹ to R³ is a halogen atom-containing alkyl group having 1 to 10 carbon atoms; and n represents 0 or 1.
[3] The nonaqueous electrolytic solution secondary battery according to [1] or [2], wherein, in Formula (1), at least one of R¹ to R³ is a trifluoroethyl group or a 1,1,1,3,3,3-hexafluoro-2-propyl group.
[4] The nonaqueous electrolytic solution secondary battery according to any one of [1] to [3], wherein the compound (1) is at least one selected from the group consisting of tris(2,2,2-trifluoroethyl) phosphate, tris(2,2,2-trifluoroethyl) phosphite, tris(1,1,1,3,3,3-hexafluoro-2-propyl) phosphate, and tris(1,1,1,3,3,3-hexafluoro-2-propyl) phosphite.
[5] The nonaqueous electrolytic solution secondary battery according to any one of [1] to [4], wherein the unsaturated bond-containing carbonate is at least one selected from the group consisting of vinylene carbonate, 4,5-diphenylvinylene carbonate, 4,5-dimethylvinylene carbonate, and vinylethylene carbonate.
[6] The nonaqueous electrolytic solution secondary battery according to any one of [1] to [5], wherein the nonaqueous electrolytic solution further contains at least one compound selected from the group consisting of diisocyanate compounds, F-S bond-containing lithium salts, and silane compounds.
[7] The nonaqueous electrolytic solution secondary battery according to any one of [1] to [6], wherein the negative electrode contains, as an active substance, an active substance (B) containing a carbon material as a main component, and the content of the active substance (B) is 90.0% by mass to 99.9% by mass with respect to a total amount of the active substance (A) and the active substance (B) .

### EFFECTS OF THE INVENTION

According to the present invention, a nonaqueous electrolytic solution secondary battery, in which a negative electrode containing a SiOx-containing active substance is used and which has an excellent balance of output characteristics and battery swelling while maintaining cycle characteristics, can be provided.

### MODE FOR CARRYING OUT THE INVENTION

The present invention will now be described in detail. The following descriptions are merely examples (representative examples) of the present invention, and the present invention is not restricted thereto. Further, modifications can be arbitrarily made to carry out the present invention, without departing from the gist of the present invention.

### [Nonaqueous Electrolytic Solution Secondary Battery]

The nonaqueous electrolytic solution secondary battery of the present embodiment is a nonaqueous electrolytic solution secondary battery which includes a nonaqueous electrolytic solution, a negative electrode, and a positive electrode, and the negative electrode contains Si atoms. In this nonaqueous electrolytic solution secondary battery, the nonaqueous electrolytic solution contains a nonaqueous solvent, a compound (1) represented by the following Formula (1), and an unsaturated bond-containing carbonate; the content of the compound (1) with respect to the whole nonaqueous electrolytic solution is 0.07% by mass to 15.0% by mass; the content of the unsaturated bond-containing carbonate with respect to the whole nonaqueous electrolytic solution is 0.2% by mass to 8.0% by mass; and, in the negative electrode, the ratio of a SiOx-containing active substance (A) with respect to all active substances is 9.0% by mass or lower: 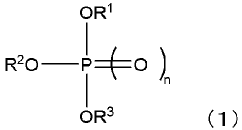 (wherein, R¹ to R³ each independently represent a hydrogen atom, or a hydrocarbon group having 1 to 10 carbon atoms which optionally has a halogen atom; at least one of R¹ to R³ is a halogen atom-containing alkyl group having 1 to 10 carbon atoms; and n represents 0 or 1).

It is needless to say that the following formula represents the same compound as the above-described Formula (1).

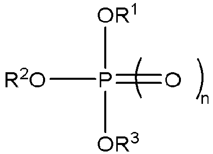

The nonaqueous electrolytic solution secondary battery of the present embodiment exerts an effect of having an excellent balance of output characteristics and battery swelling while maintaining cycle characteristics, despite using a negative electrode that contains a SiOx-containing active substance. The reason why the present invention exerts such an effect is not clear; however, it is presumed as follows. The compound represented by Formula (1), which is contained in the nonaqueous electrolytic solution used in the present embodiment, is believed to undergo a specific reaction with the SiOx contained in the negative electrode and thereby bind to the SiOx surface (it is generally known that an organophosphate reacts with the surface of an oxide, and the compound (1) is believed to undergo a specific reaction with the surface of the negative electrode active substance SiOx). It is believed that, subsequently, as the electric potential decreases, a reductive decomposition reaction starts at a halogen atom contained in the compound (1), and an intermediate produced in this reduction process further reacts with the unsaturated bond-containing carbonate, whereby a highly adhesive high-passivation coating film is formed on the SiOx surface. In this case, a favorable coating film is expected to be formed in an appropriate amount on the SiOx surface only if the compound (1) and the unsaturated bond-containing carbonate react with each other just enough; therefore, it is necessary that the compound (1) and the unsaturated bond-containing carbonate be each contained in the nonaqueous electrolytic solution in an appropriate concentration range. The coating film formed on the SiOx surface supposedly inhibits a reaction between the active substance and the electrolytic solution that is caused by a change in the volume of the active substance. Normally, in a nonaqueous electrolytic solution secondary battery, a change in the volume of a negative electrode is caused by charging and discharging, and an electrolytic solution is reduced and decomposed in this process. This side reaction contributes to a decrease in the capacity retention rate, a reduction in the post-charging/discharging output, and deterioration of the battery such as swelling. Particularly, when a SiOx atom-containing active substance is used as a negative electrode, the change in the volume is increased and the deterioration caused by the side reaction markedly proceeds; however, it is presumed that, because of the formation of a highly adhesive coating film on the active substance by the nonaqueous electrolytic solution used in the present embodiment, the side reaction of the electrolytic solution is inhibited and the above-described deterioration is suppressed. Further, since the SiOx-containing active substance is incorporated in a specific amount or less, it is presumed that the above-described coating film can be sufficiently formed on the active substance, so that the above-described effects are exerted.

### <1. Nonaqueous Electrolytic Solution>

The nonaqueous electrolytic solution used in the present embodiment contains a nonaqueous solvent, a compound (1) represented by the following Formula (1), and an unsaturated bond-containing carbonate, and the content of each of these components is 0.07% by mass to 15.0% by mass with respect to a total amount of the nonaqueous electrolytic solution. 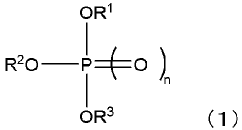 (wherein, R¹ to R³ each independently represent a hydrogen atom, or a hydrocarbon group having 1 to 10 carbon atoms which optionally has a halogen atom; at least one of R¹ to R³ is a halogen atom-containing alkyl group having 1 to 10 carbon atoms; and n represents 0 or 1)

### <1-1. Compound (1)>

The nonaqueous electrolytic solution used in the present embodiment contains the compound (1). In Formula (1), R¹ to R³ each independently represent a hydrogen atom, or a hydrocarbon group having 1 to 10 carbon atoms which optionally has a halogen atom; at least one of R¹ to R³ is a halogen atom-containing alkyl group having 1 to 10 carbon atoms; and n represents 0 or 1. Examples of the halogen atom include fluorine, chlorine, iodine, and bromine, among which fluorine is preferred.

Particularly, in Formula (1), R¹ to R³ are each independently preferably a hydrogen atom, or a hydrocarbon group having 1 to 5 carbon atoms which optionally has a halogen atom, more preferably a fluorine-containing hydrocarbon group having 1 to 5 carbon atoms. This is because such a compound has a small steric hindrance around the P atom that is the reaction site with a SiOx, and shows an effect of forming lithium fluoride, which is considered as a favorable coating film component, by a reduction reaction. More specifically, it is preferred that at least one of R¹ to R³ be a trifluoroethyl group or a 1,1,1,3,3,3-hexafluoro-2-propyl group, and it is more preferred that all of R¹ to R³ be trifluoroethyl groups or 1,1,1,3,3,3-hexafluoro-2-propyl groups. The compound (1) is particularly preferably at least one selected from the group consisting of tris(2,2,2-trifluoroethyl) phosphate, tris(2,2,2-trifluoroethyl) phosphite, tris(1,1,1,3,3,3-hexafluoro-2-propyl) phosphate, and tris(1,1,1,3,3,3-hexafluoro-2-propyl) phosphite.

The content of the compound (1) in the nonaqueous electrolytic solution is 0.07% by mass to 15.0% by mass. The content of the compound (1) in the nonaqueous electrolytic solution is preferably not less than 0.1% by mass, more preferably not less than 0.4% by mass, still more preferably not less than 0.8% by mass, yet still more preferably not less than 1.1% by mass, particularly preferably not less than 1.5% by mass, especially preferably not less than 2.0% by mass, but preferably 12.0% by mass or less, more preferably 10.0% by mass or less, still more preferably 7.0% by mass or less, yet still more preferably 5.0% by mass or less, particularly preferably 4.0% by mass or less, most preferably 3.5% by mass or less. When the content of the compound (1) is the above-described lower limit value or higher, battery swelling tends to be inhibited, while when the content of the compound (1) is the above-described upper limit value or less, well-balanced battery characteristics are attained.

### <1-2. Unsaturated Bond-Containing Carbonate>

The nonaqueous electrolytic solution used in the present embodiment contains an unsaturated bond-containing carbonate. More specifically, the unsaturated bond-containing carbonate is preferably at least one selected from the group consisting of vinylene carbonate, 4,5-diphenylvinylene carbonate, 4,5-dimethylvinylene carbonate, and vinylethylene carbonate.

The content of the unsaturated bond-containing carbonate in the nonaqueous electrolytic solution is 0.2% by mass to 8.0% by mass. The content of the unsaturated bond-containing carbonate is preferably not less than 0.3% by mass, but preferably 5.0% by mass or less, more preferably 3.0% by mass or less, still more preferably 1.0% by mass or less, yet still more preferably 0.5% by mass or less. When the concentration of this compound is in the above-described range, a synergistic effect attributed to the use of such an unsaturated bond-containing carbonate in combination with the compound (1) is more likely to be expressed.

### <1-3. Nonaqueous Solvent>

Similarly to a general nonaqueous electrolytic solution, the nonaqueous electrolytic solution used in the present embodiment usually contains, as its main component, a nonaqueous solvent that dissolves the below-described electrolytes. The nonaqueous solvent used in the nonaqueous electrolytic solution is not particularly restricted, and any known organic solvent can be used. The organic solvent is preferably, for example, but not particularly limited to: at least one selected from a saturated cyclic carbonate, a linear carbonate, a linear carboxylic acid ester, a cyclic carboxylic acid ester, an ether-based compound, and a sulfone-based compound. These organic solvents may be used singly, or in combination of two or more thereof.

### <1-3-1. Saturated Cyclic Carbonate>

Examples of the saturated cyclic carbonate include those containing an alkylene group having 2 to 4 carbon atoms. Specific examples of the saturated cyclic carbonates containing an alkylene group having 2 to 4 carbon atoms include ethylene carbonate, propylene carbonate, and butylene carbonate. Thereamong, ethylene carbonate and propylene carbonate are preferred from the standpoint of attaining an improvement in the battery characteristics that is attributed to an increase in the degree of lithium ion dissociation. Any of these saturated cyclic carbonates may be used singly, or two or more thereof may be used in any combination at any ratio.

The content of the saturated cyclic carbonate is not particularly restricted and may be set arbitrarily as long as the effects of the present invention are not markedly impaired; however, when a single saturated cyclic carbonate is used alone, the lower limit of the content is usually not less than 3% by volume, preferably not less than 5% by volume, in 100% by volume of the nonaqueous solvent. By controlling the content of the saturated cyclic carbonate to be in this range, a decrease in the electrical conductivity caused by a reduction in the dielectric constant of the nonaqueous electrolytic solution is avoided, so that the high-current discharge characteristics, the stability to the negative electrode, and the cycle characteristics of the nonaqueous electrolytic solution secondary battery are all likely to be attained in favorable ranges. Meanwhile, the upper limit of the content of the saturated cyclic carbonate is usually 90% by volume or less, preferably 85% by volume or less, more preferably 80% by volume or less. By controlling the content of the saturated cyclic carbonate to be in this range, the viscosity of the nonaqueous electrolytic solution is kept in an appropriate range and a reduction in the ionic conductivity is inhibited, as a result of which the input-output characteristics of the nonaqueous electrolytic solution secondary battery can be further improved and the durability, such as cycle characteristics and storage characteristics, can be further enhanced, which is preferred.

### <1-3-2. Linear Carbonate>

As the linear carbonate, one having 3 to 7 carbon atoms is preferred. Specific examples of the linear carbonate having 3 to 7 carbon atoms include dimethyl carbonate, diethyl carbonate, di-*n*-propyl carbonate, diisopropyl carbonate, *n*-propyl isopropyl carbonate, ethyl methyl carbonate, methyl-*n*-propyl carbonate, *n*-butyl methyl carbonate, isobutyl methyl carbonate, *t*-butyl methyl carbonate, ethyl-*n*-propyl carbonate, *n*-butyl ethyl carbonate, isobutyl ethyl carbonate, and *t*-butyl ethyl carbonate. Thereamong, dimethyl carbonate, diethyl carbonate, di-n-propyl carbonate, diisopropyl carbonate, *n*-propyl isopropyl carbonate, ethyl methyl carbonate and methyl-*n*-propyl carbonate are preferred, and dimethyl carbonate, diethyl carbonate and ethyl methyl carbonate are particularly preferred.

Further, a fluorine atom-containing linear carbonate (hereinafter, may be simply referred to as "fluorinated linear carbonate") can be preferably used as well. The number of fluorine atoms in the fluorinated linear carbonate is not particularly restricted as long as it is one or more; however, it is usually six or less, preferably four or less. When the fluorinated linear carbonate has plural fluorine atoms, the fluorine atoms may be bound to the same carbon, or may be bound to different carbons. Examples of the fluorinated linear carbonate include fluorinated dimethyl carbonate derivatives, fluorinated ethyl methyl carbonate derivatives, and fluorinated diethyl carbonate derivatives.

Any of the above-described linear carbonates may be used singly, or two or more thereof may be used in any combination at any ratio.

The content of the linear carbonate is not particularly restricted; however, it is usually not less than 15% by volume, preferably not less than 20% by volume, more preferably not less than 25% by volume, but usually 90% by volume or less, preferably 85% by volume or less, more preferably 80% by volume or less, in 100% by volume of the nonaqueous solvent. By controlling the content of the linear carbonate to be in this range, the viscosity of the nonaqueous electrolytic solution is kept in an appropriate range and a reduction in the ionic conductivity is inhibited, as a result of which the input-output characteristics and the charge-discharge rate characteristics of the nonaqueous electrolytic solution secondary battery are likely to be attained in favorable ranges. Further, a decrease in the electrical conductivity caused by a reduction in the dielectric constant of the nonaqueous electrolytic solution is avoided, so that the input-output characteristics and the charge-discharge rate characteristics of the nonaqueous electrolytic solution secondary battery are likely to be attained in favorable ranges.

### <1-3-3. Linear Carboxylic Acid Ester>

Examples of the linear carboxylic acid ester include those having a total of 3 to 7 carbon atoms in their respective structures. Specific examples of such linear carboxylic acid esters include methyl acetate, ethyl acetate, *n*-propyl acetate, isopropyl acetate, *n*-butyl acetate, isobutyl acetate, *t*-butyl acetate, methyl propionate, ethyl propionate, *n*-propyl propionate, isopropyl propionate, *n*-butyl propionate, isobutyl propionate, *t*-butyl propionate, methyl butyrate, ethyl butyrate, *n*-propyl butyrate, isopropyl butyrate, methyl isobutyrate, ethyl isobutyrate, *n*-propyl isobutyrate, and isopropyl isobutyrate. Thereamong, methyl acetate, ethyl acetate, *n*-propyl acetate, *n*-butyl acetate, methyl propionate, ethyl propionate, *n-*propyl propionate, isopropyl propionate, methyl butyrate or ethyl butyrate is preferred from the standpoints of improving the ionic conductivity through a reduction in the viscosity and inhibiting battery swelling in durability tests for cycle operation, storage and the like.

### <1-3-4. Cyclic Carboxylic Acid Ester>

Examples of the cyclic carboxylic acid ester include those having a total of 3 to 12 carbon atoms in their respective structures. Specific examples of such cyclic carboxylic acid esters include *γ*-butyrolactone, *γ*-valerolactone, *γ*-caprolactone, and *ε*-caprolactone. Thereamong, *γ*-butyrolactone is particularly preferred from the standpoint of attaining an improvement in the battery characteristics that is attributed to an increase in the degree of lithium ion dissociation.

### <1-3-5. Ether-Based Compound>

The ether-based compound is preferably a linear ether having 3 to 10 carbon atoms, or a cyclic ether having 3 to 6 carbon atoms.

Examples of the linear ether having 3 to 10 carbon atoms include diethyl ether, di(2-fluoroethyl)ether, di(2,2-difluoroethyl)ether, di(2,2,2-trifluoroethyl)ether, ethyl(2-fluoroethyl)ether, ethyl(2,2,2-trifluoroethyl)ether, ethyl(1,1,2,2-tetrafluoroethyl)ether, (2-fluoroethyl) (2,2,2-trifluoroethyl)ether, (2-fluoroethyl)(1,1,2,2-tetrafluoroethyl)ether, (2,2,2-trifluoroethyl) (1,1,2,2-tetrafluoroethyl)ether, ethyl-*n*-propyl ether, ethyl(3-fluoro-*n*-propyl)ether, ethyl(3,3,3-trifluoro-*n*-propyl) ether, ethyl(2,2,3,3-tetrafluoro-*n*-propyl) ether, ethyl(2,2,3,3,3-pentafluoro-*n*-propyl) ether, 2-fluoroethyl-*n*-propyl ether, (2-fluoroethyl) (3-fluoro-*n*-propyl) ether, (2-fluoroethyl) (3,3,3-trifluoro-*n*-propyl)ether, (2-fluoroethyl)(2,2,3,3-tetrafluoro-*n*-propyl)ether, (2-fluoroethyl) (2,2,3,3,3-pentafluoro-n-propyl)ether, 2,2,2-trifluoroethyl-*n*-propyl ether, (2,2,2-trifluoroethyl) (3-fluoro-*n*-propyl) ether, (2,2,2-trifluoroethyl) (3,3,3-trifluoro-*n*-propyl) ether, (2,2,2-trifluoroethyl) (2,2,3,3-tetrafluoro-*n*-propyl) ether, (2,2,2-trifluoroethyl) (2,2,3,3,3-pentafluoro-*n*-propyl)ether, 1,1,2,2-tetrafluoroethyl-*n*-propyl ether, (1,1,2,2-tetrafluoroethyl)(3-fluoro-*n*-propyl)ether, (1,1,2,2-tetrafluoroethyl)(3,3,3-trifluoro-*n*-propyl)ether, (1,1,2,2-tetrafluoroethyl) (2,2,3,3-tetrafluoro-*n*-propyl)ether, (1,1,2,2-tetrafluoroethyl) (2,2,3,3,3-pentafluoro-*n*-propyl)ethe r, di-n-propyl ether, (*n*-propyl)(3-fluoro-n-propyl)ether, (n-propyl) (3,3,3-trifluoro-*n*-propyl) ether, (n-propyl) (2,2,3,3-tetrafluoro-*n*-propyl) ether, (n-propyl) (2,2,3,3,3-pentafluoro-*n*-propyl) ether, di(3-fluoro-*n*-propyl)ether, (3-fluoro-n-propyl) (3,3,3-trifluoro-*n*-propyl) ether, (3-fluoro-n-propyl) (2,2,3,3-tetrafluoro-*n*-propyl) ether, (3-fluoro-n-propyl) (2,2,3,3,3-pentafluoro-*n*-propyl) ether, di(3,3,3-trifluoro-*n*-propyl)ether, (3,3,3-trifluoro-*n*-propyl)(2,2,3,3-tetrafluoro-n-propyl)ether, (3,3,3-trifluoro-*n*-propyl) (2,2,3,3,3-pentafluoro-*n*-propyl)ethe r, di(2,2,3,3-tetrafluoro-*n*-propyl)ether, (2,2,3,3-tetrafluoro-*n*-propyl)(2,2,3,3,3-pentafluoro-n-propyl) ether, di(2,2,3,3,3-pentafluoro-*n*-propyl)ether, di-*n*-butyl ether, dimethoxymethane, methoxyethoxymethane, methoxy(2-fluoroethoxy)methane, methoxy(2,2,2-trifluoroethoxy)methane, methoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy)methane, di(2-fluoroethoxy)methane, (2-fluoroethoxy) (2,2,2-trifluoroethoxy)methane, (2-fluoroethoxy) (1,1,2,2-tetrafluoroethoxy)methane, di(2,2,2-trifluoroethoxy)methane, (2,2,2-trifluoroethoxy) (1,1,2,2-tetrafluoroethoxy)methane, di(1,1,2,2-tetrafluoroethoxy)methane, dimethoxyethane, methoxyethoxyethane, methoxy(2-fluoroethoxy)ethane, methoxy(2,2,2-trifluoroethoxy) ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluoroethoxy)ethane, di (2-fluoroethoxy)ethane, (2-fluoroethoxy) (2,2,2-trifluoroethoxy)ethane, (2-fluoroethoxy) (1,1,2,2-tetrafluoroethoxy) ethane, di(2,2,2-trifluoroethoxy)ethane, (2,2,2-trifluoroethoxy) (1,1,2,2-tetrafluoroethoxy)ethane, di(1,1,2,2-tetrafluoroethoxy)ethane, ethylene glycol di-*n*-propyl ether, ethylene glycol di-*n*-butyl ether, and diethylene glycol dimethyl ether.

Examples of the cyclic ether include tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane, and fluorinated compounds thereof. Thereamong, dimethoxymethane, diethoxymethane, ethoxymethoxymethane, ethylene glycol di-*n*-propyl ether, ethylene glycol di-*n*-butyl ether, and diethylene glycol dimethyl ether are preferred since they have a high solvating capacity with lithium ions and thus improve the lithium ion dissociation. Particularly preferred are dimethoxymethane, diethoxymethane, and ethoxymethoxymethane since they have a low viscosity and provide a high ionic conductivity.

### <1-3-6. Sulfone-Based Compound>

The sulfone-based compound is preferably a cyclic sulfone having 3 to 6 carbon atoms, or a linear sulfone having 2 to 6 carbon atoms. The number of sulfonyl groups in one molecule is preferably 1 or 2.

Examples of the cyclic sulfone include: monosulfone compounds, such as trimethylene sulfones, tetramethylene sulfones, and hexamethylene sulfones; and disulfone compounds, such as trimethylene disulfones, tetramethylene disulfones, and hexamethylene disulfones. Thereamong, from the standpoints of the dielectric constant and the viscosity, tetramethylene sulfones, tetramethylene disulfones, hexamethylene sulfones and hexamethylene disulfones are more preferred, and tetramethylene sulfones (sulfolanes) are particularly preferred.

As the sulfolanes, sulfolane and sulfolane derivatives (hereinafter, may be simply referred to as "sulfolanes", including sulfolane) are preferred. As the sulfolane derivatives, those in which one or more hydrogen atoms bound to carbon atoms constituting a sulfolane ring are substituted with a fluorine atom or an alkyl group are preferred.

Among such sulfolane derivatives, for example, 2-methyl sulfolane, 3-methyl sulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methyl sulfolane, 2-fluoro-2-methyl sulfolane, 3-fluoro-3-methyl sulfolane, 3-fluoro-2-methyl sulfolane, 4-fluoro-3-methyl sulfolane, 4-fluoro-2-methyl sulfolane, 5-fluoro-3-methyl sulfolane, 5-fluoro-2-methyl sulfolane, 2-fluoromethyl sulfolane, 3-fluoromethyl sulfolane, 2-difluoromethyl sulfolane, 3-difluoromethyl sulfolane, 2-trifluoromethyl sulfolane, 3-trifluoromethyl sulfolane, 2-fluoro-3-(trifluoromethyl)sulfolane, 3-fluoro-3-(trifluoromethyl)sulfolane, 4-fluoro-3-(trifluoromethyl)sulfolane, and 5-fluoro-3-(trifluoromethyl)sulfolane are preferred from the standpoint of attaining a high ionic conductivity and a high input/output.

Examples of the linear sulfone include dimethyl sulfone, ethyl methyl sulfone, diethyl sulfone, n-propyl methyl sulfone, n-propyl ethyl sulfone, di-n-propyl sulfone, isopropyl methyl sulfone, isopropyl ethyl sulfone, diisopropyl sulfone, n-butyl methyl sulfone, n-butyl ethyl sulfone, t-butyl methyl sulfone, t-butyl ethyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, perfluoroethyl methyl sulfone, ethyl trifluoroethyl sulfone, ethyl pentafluoroethyl sulfone, di(trifluoroethyl)sulfone, perfluorodiethyl sulfone, fluoromethyl-*n*-propyl sulfone, difluoromethyl-*n*-propyl sulfone, trifluoromethyl-*n*-propyl sulfone, fluoromethyl isopropyl sulfone, difluoromethyl isopropyl sulfone, trifluoromethyl isopropyl sulfone, trifluoroethyl-*n*-propyl sulfone, trifluoromethyl-*n*-butyl sulfone, trifluoromethyl-*t*-butyl sulfone, trifluoroethyl isopropyl sulfone, pentafluoroethyl-*n*-propyl sulfone, pentafluoroethyl isopropyl sulfone, trifluoroethyl-*n*-butyl sulfone, trifluoroethyl-*t*-butyl sulfone, pentafluoroethyl-*n*-butyl sulfone, and pentafluoroethyl-*t*-butyl sulfone.

Thereamong, for example, dimethyl sulfone, ethyl methyl sulfone, diethyl sulfone, *n*-propyl methyl sulfone, isopropyl methyl sulfone, *n*-butyl methyl sulfone, *t*-butyl methyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, ethyl trifluoroethyl sulfone, ethyl pentafluoroethyl sulfone, trifluoromethyl-*n*-propyl sulfone, trifluoromethyl isopropyl sulfone, trifluoroethyl-*n*-butyl sulfone, trifluoroethyl-*t*-butyl sulfone, trifluoromethyl-*n*-butyl sulfone, and trifluoromethyl-*t*-butyl sulfone are preferred from the standpoint of attaining a high ionic conductivity and a high input/output.

### <1-4. Electrolyte>

The nonaqueous electrolytic solution used in the present embodiment usually contains an electrolyte. Particularly, when the nonaqueous electrolytic solution secondary battery provided by the present embodiment is a lithium ion secondary battery, the nonaqueous electrolytic solution usually contains a lithium salt.

Examples of a lithium salt that can be used in the nonaqueous electrolytic solution used in the present embodiment include LiClO₄, LiBF₄, LiPF₆, LiAsF₆, LiTaF₆, LiCF₃SO₃, LiC₄F₉SO₃, Li(CF₃SO₂)₂N, Li(C₂F₅SO₂)₂N, Li(CF₃)SO₂)₃C, LiBF₃(C₂F₅), LiB(C₂O₄)₂, LiB(C₆F₅)₄, and LiPF₃(C₂F₅)₃. These lithium salts may be used singly, or in combination of two or more thereof. In the present specification, a lithium salt having an F-S bond is classified as the below-described (B) F-S bond-containing lithium salt.

The final composition of the nonaqueous electrolytic solution used in the present embodiment may have any concentration of the electrolyte, such as a lithium salt, as long as the effects of the present invention are not markedly impaired; however, the concentration of the electrolyte is preferably 0.5 mol/L or higher, more preferably 0.6 mol/L or higher, still more preferably 0.7 mol/L or higher, but preferably 3 mol/L or lower, more preferably 2 mol/L or lower, still more preferably 1.8 mol/L or lower. By controlling the content of the lithium salt to be in this range, the ionic conductivity can be increased appropriately.

A method of measuring the content of the above-described lithium salt is not particularly restricted, and any known method can be employed. Examples of the method include ion chromatography and F magnetic resonance spectrometry.

### <1-5. Other Additives>

In addition to the above-described various compounds, the nonaqueous electrolytic solution used in the present embodiment may also contain, for example, a cyano group-containing compound, such as malononitrile, succinonitrile, glutaronitrile, adiponitrile, pimelonitrile, suberonitrile, azelanitrile, sebaconitrile, undecanedinitrile, or dodecanedinitrile; a carboxylic anhydride compound, such as acrylic anhydride, 2-methylacrylic anhydride, 3-methylacrylic anhydride, benzoic anhydride, 2-methylbenzoic anhydride, 4-methylbenzoic anhydride, 4-tert-butylbenzoic anhydride, 4-fluorobenzoic anhydride, 2,3,4,5,6-pentafluorobenzoic anhydride, methoxyformic anhydride, ethoxyformic anhydride, succinic anhydride, or maleic anhydride; a sulfonate compound such as 1, 3-propane sultone; and/or a phosphate such as lithium difluorophosphate. It is noted here that the above-exemplified lithium difluorophosphate corresponds to a lithium salt; however, hereinafter, it is not handled as an electrolyte and regarded as an additive from the standpoint of the degree of its ionization in the nonaqueous solvent used in the nonaqueous electrolytic solution. Further, as an overcharge inhibitor, a variety of additives, such as cyclohexylbenzene, t-butylbenzene, t-amylbenzene, biphenyl, alkylbiphenyls, terphenyl, partially hydrogenated terphenyl, diphenyl ether, and dibenzofuran, may be incorporated within a range that does not markedly impair the effects of the present invention. A combination of these compounds may be used as appropriate.

In the nonaqueous electrolytic solution used in the present embodiment, examples of particularly preferred other additives that have particularly high addition effects and exert their effects in a synergistic manner include (A) an isocyanate compound, (B) an F-S bond-containing lithium salt, and (C) a silane compound. It is believed that these compounds, similarly to an unsaturated bond-containing carbonate, react with the intermediate produced in the reduction process of the compound (1) and are incorporated as coating film components to further improve the properties of the resulting coating film.

### <1-5-1. (A) Isocyanate Compound>

The isocyanate compound is not particularly restricted in terms of its type as long as it is a compound that contains an isocyanate group in the molecule. Specific examples of the isocyanate compound include: monoisocyanate compounds, such as methyl isocyanate and ethyl isocyanate; monoisocyanate compounds having a carbon-carbon unsaturated bond, such as vinyl isocyanate and allyl isocyanate; diisocyanate compounds, such as hexamethylene diisocyanate and 1,3-bis(isocyanatomethyl)cyclohexane; and sulfonyl isocyanate compounds, such as diisocyanatosulfone and (*ortho-, meta-,* or *para*-)toluenesulfonyl isocyanate. The isocyanate compound may be an adduct obtained by adding a diisocyanate monomer to a polyhydric alcohol, a trimeric isocyanurate, or a biuret. The isocyanate compound is preferably a diisocyanate compound, such as hexamethylene diisocyanate or 1,3-bis(isocyanatomethyl)cyclohexane, allyl isocyanate, diisocyanatosulfone, or (*ortho-, meta-,* or *para*-)toluenesulfonyl isocyanate, particularly preferably hexamethylene diisocyanate or 1,3-bis(isocyanatomethyl)cyclohexane.

### <1-5-2. (B) F-S Bond-Containing Lithium Salt>

The (B) F-S bond-containing lithium salt is not particularly restricted as long as it is a lithium salt that contains an F-S bond in the molecule, and any such lithium salt can be used as long as it does not markedly impair the effects of the present invention. Examples thereof include, but not particularly limited to:
lithium fluorosulfonate (LiFSO₃);
fluorosulfonylimide lithium salts, such as lithium bis(fluorosulfonyl) imide (LiN(FSO₂)₂) and LiN(FₛO₂)(CF₃SO₂) ;
fluorosulfonylmethide lithium salts, such as LiC(FSO₂)₃; and
lithium fluorosulfonyl borates, such as LiBF₃(FSO₃) and LiB(FSO₂)₄.

The (B) F-S bond-containing lithium salt may be used singly, or in combination of two or more thereof.

Among the above-exemplified lithium salts, LiFSO₃ and LiN(FSO₂)₂ are preferred, and LiFSO₃ is particularly preferred.

### <1-5-3. (C) Silane Compound>

The silane compound is not particularly restricted in terms of its type as long as it a compound that contains a silicon atom in the molecule. Specific examples of the silane compound include:
organomonosilane compounds, such as methylsilane, dimethylsilane, trimethylsilane, diethylsilane, propylsilane, phenylsilane, tetramethylsilane, tetraethylsilane, di-t-butylsilane, di-t-butylmethylsilane, benzyltrimethylsilane, trimethylvinylsilane, trimethylallylsilane, diallyldimethylsilane, propargyltrimethylsilane, tetramethoxysilane, tetraethoxysilane, tetra-*n*-propoxysilane, tetraisopropoxysilane, tetra-*n*-butoxysilane, tetra-*t*-butoxysilane, dimethyldimethoxysilane, dimethyldiethoxysilane, diethyldimethoxysilane, methyltriethoxysilane, ethyltrimethoxysilane, (3,3,3-trifluoropropyl)trimethoxysilane, diphenyldimethoxysilane, and phenyltriethoxysilane;
disilane compounds, such as hexamethyldisilane, hexaethyldisilane, tetramethyldiphenyldisilane, tetraphenyldimethyldisilane, difluorotetramethyldisilane, dichlorotetramethyldisilane, trichlorotrimethyldisilane, tetrachlorodimethyldisilane, dimethoxytetramethyldisilane, hexachlorodisilane, tetramethoxydimethyldisilane, and tetrafluorodimethyldisilane; and
organosiloxane compounds, such as hexamethyldisiloxane, hexaethyldisiloxane, 1,1,3,3-tetramethyldisiloxane, tetramethyl-1,3-divinyldisiloxane, and tetramethyl-1,3-diallyldisiloxane.

The silane compound is preferably a monosilane compound having a carbon-carbon unsaturated bond (e.g., a vinyl group, an alkenylene group or an alkynylene group), such as trimethylvinylsilane or trimethylallylsilane; a siloxane compound having a carbon-carbon unsaturated bond (e.g., a vinyl group, an alkenylene group, or an alkynylene group), such as tetramethyl-1,3-divinyldisiloxane or tetramethyl-1,3-diallyldisiloxane; or a disilane compound, such as hexamethyldisilane or hexaethyldisilane,
more preferably an alkenylalkylsilane compound, such as trimethylvinylsilane or trimethylallylsilane; or an unsubstituted disilane compound, such as hexamethyldisilane or hexaethyldisilane,
particularly preferably trimethylvinylsilane or hexamethyldisilane.

In the present specification, the "composition of the nonaqueous electrolytic solution" means the composition at any one of the time points when the nonaqueous electrolytic solution is produced, when the nonaqueous electrolytic solution is injected into a battery, and when the battery is shipped out as a product.

In other words, the nonaqueous electrolytic solution may be prepared by mixing its constituents at the respective predetermined ratios. Further, after the preparation of the nonaqueous electrolytic solution, the composition thereof can be verified by analyzing the thus obtained nonaqueous electrolytic solution itself. Alternatively, the nonaqueous electrolytic solution may be recovered from a completed nonaqueous electrolytic solution secondary battery and analyzed. As a method of recovering the nonaqueous electrolytic solution, for example, a method of partially or entirely opening the battery container or forming a hole on the battery container to collect the electrolytic solution may be employed. The opened battery container may be centrifuged to recover the electrolytic solution, or the electrolytic solution may be extracted by putting an extraction solvent (preferably, for example, acetonitrile dehydrated to a water content of 10 ppm or less) into the battery container, or bringing the extraction solvent into contact with battery elements. The nonaqueous electrolytic solution recovered by any of these methods can be subjected to an analysis. The recovered nonaqueous electrolytic solution may be diluted before the analysis in order to adjust the conditions to be suitable for the analysis.

Specific examples of a method of analyzing the nonaqueous electrolytic solution include the use of nuclear magnetic resonance (hereinafter, may be abbreviated as "NMR"), gas chromatography, and liquid chromatography such as ion chromatography. An analysis method based on NMR will now be described. In an inert atmosphere, the nonaqueous electrolytic solution is dissolved in a deuterated solvent dehydrated to 10 ppm or less, and the resulting solution is placed in an NMR tube to measure the NMR. Alternatively, using a double-pipe NMR tube, the nonaqueous electrolytic solution may be added to one of the pipes while the deuterated solvent is added to the other pipe to perform the NMR measurement. Examples of the deuterated solvent include deuterated acetonitrile and deuterated dimethyl sulfoxide. In the case of determining the concentrations of the respective constituents of the nonaqueous electrolytic solution, prescribed amounts of standard substances are dissolved in the deuterated solvent, and the concentration of each constituent can be calculated from a spectral ratio. It is also possible to determine the concentration of at least one component constituting the nonaqueous electrolytic solution in advance by other analysis method such as gas chromatography, and the concentration of other component can be calculated from a spectral ratio between the component having a known concentration and the other component. As a nuclear magnetic resonance analyzer to be used, one having a magnetic field of 400 MHz or higher is preferred. Examples of a measurement nuclide include ¹H, ³¹P, and ¹⁹F.

These analysis methods may be employed singly, or in combination of two or more thereof.

### <2. Negative Electrode>

The negative electrode used in the present embodiment contains an active substance (A) containing SiOx (0.5 ≤ x ≤ 1.6), and the ratio of the active substance (A) with respect to all active substances is 9.0% by mass or lower. The negative electrode preferably further contains, as other active substance, an active substance (B) containing a carbon material as a main component.

### <2-1. Active Substance (A) >

The negative electrode used in the present embodiment contains an active substance (A) containing SiOx (0.5 ≤ x ≤ 1.6) .

In the SiOx, x is more preferably 0.7 to 1.3, particularly preferably 0.8 to 1.2. When x is in this range, the SiOx is a highly active amorphous SiOx which alkali ions such as Li ions can readily move in and out. In the SiOx contained in the negative electrode active substance, x can be determined by, for example, a quantitative analysis of Si based on inductively-coupled plasma emission spectrometry or molybdenum blue absorption spectrometry of an aqueous solution in which the SiOx is fused with an alkali or dissolved with dilute hydrofluoric acid, and a quantitative analysis of O using an oxygen-nitrogen-hydrogen analyzer or an oxygen-nitrogen analyzer.

Further, the SiOx preferably contains Si microcrystals. These microcrystals are usually zero-valent Si atoms. The SiOx may also be in the form of composite-type SiOx particles each having a carbon layer composed of amorphous carbon at least partially on the surface. The phrase "having a carbon layer composed of amorphous carbon at least partially on the surface" used herein encompasses not only a mode in which the carbon layer covers a part or the entirety of the surface of a silicon oxide particle in the form of a layer, but also a mode in which the carbon layer is adhered or impregnated to a part or the entirety of the surface. The carbon layer may be provided in a manner to cover the entirety of the surface, or only a part of the surface may be covered or adhered/impregnated with the carbon layer. Further, the SiOx may be doped with an element other than Si and O. The SiOx doped with an element other than Si and O have a stabilized chemical structure inside the particles and are thus expected to improve the initial charge-discharge efficiency and the cycle characteristics of the nonaqueous electrolytic solution secondary battery. As the element to be doped, usually, any element that does not belong to Group 18 of the periodic table can be selected; however, in order to make the SiOx doped with an element other than Si and O more stable, an element belonging to the first four periods of the periodic table is preferred. Specifically, the element to be doped can be selected from those elements belonging to the first four periods of the periodic table, such as alkali metals, alkaline earth metals, Al, Ga, Ge, N, P, As, and Se. In order to improve the lithium ion acceptability of the SiOx doped with an element other than Si and O, the element to be doped is preferably an alkali metal or alkaline earth metal that belongs to the first four periods of the periodic table, more preferably Mg, Ca or Li, still more preferably Li. These elements may be used singly, or in combination of two or more thereof.

The ratio of the active substance (A) with respect to the whole negative electrode active substance is 9.0% by mass or lower. More specifically, the ratio of the active substance (A) is preferably 3.0% by mass to 8.0% by mass. When the ratio of the active substance (A) is in this range, the use of the active substance (A) in combination with the nonaqueous electrolytic solution used in the present embodiment is more likely to exert a synergistic effect.

### <2-2. Active Substance (B)>

The negative electrode used in the present embodiment preferably contains an active substance (B) containing a carbon material as a main component. The phrase "containing a carbon material as a main component" used herein means a state in which the ratio of the carbon material in the active substance (B) is 50% by mass or higher. The active substance (B) is, for example, a graphite, an amorphous carbon, or a carbonaceous material having a low graphitization degree. Examples of the type of the graphite include natural graphites and artificial graphites. These graphites coated with a carbonaceous material, such as an amorphous carbon or a graphitized material, may be used as well. Examples of the amorphous carbon include particles obtained by calcinating a bulk mesophase, and particles obtained by infusibilizing and calcinating a carbon precursor. Examples of carbonaceous material particles having a low graphitization degree include those obtained by calcinating organic substances usually at a temperature of lower than 2,500°C. Any of these materials may be used singly, or two or more thereof may be used in any combination.

The content of the active substance (B) is preferably 90.0% by mass to 99.9% by mass with respect to a total amount of the active substance (A) and the active substance (B). When the content of the active substance (B) is in this range, the use of the active substance (B) in combination with the nonaqueous electrolytic solution used in the present embodiment is more likely to exert a synergistic effect.

As a method of verifying the composition of the negative electrode active substance, the ratio of its constituents may be determined in advance at the time of preparing a raw-material slurry of the negative electrode. Alternatively, after the negative electrode is prepared, the electrode itself may be analyzed to verify the composition. Further, after the preparation of the negative electrode, the negative electrode itself may be taken out of a completed battery to be analyzed. Specifically, after the battery is sufficiently discharged, the battery is disassembled in an inert atmosphere to take out the negative electrode, and this electrode is washed in an electrolyte solvent that has been sufficiently dehydrated (preferably, for example, dimethyl carbonate dehydrated to a water content of 10 ppm or less) and then dried.

Examples of a method of analyzing the SiOx content in the negative electrode active substance include a quantitative analysis of Si atoms based on inductively-coupled plasma emission spectrometry or molybdenum blue absorption spectrometry of an aqueous solution in which the SiOx is fused with an alkali or dissolved with dilute hydrofluoric acid, and a quantitative analysis of O atoms using an oxygen-nitrogen-hydrogen analyzer or an oxygen-nitrogen analyzer. When the negative electrode active substance contains a carbon material, for example, an analysis for quantification of C atoms may be performed using a carbon-sulfur analyzer or an organic element analyzer.

### <3. Positive Electrode>

In the nonaqueous secondary battery of the present embodiment, examples of a positive electrode material that may be used as an active substance of the positive electrode include lithium-transition metal composite oxides, such as lithium-cobalt composite oxide having a basic composition represented by LiCoO₂, lithium-nickel composite oxide represented by LiNiO₂, and lithium-manganese composite oxide represented by LiMnO₂ or LiMn₂O₄; transition metal oxides, such as manganese dioxide; and mixtures of these composite oxides. Further, TiS₂, FeS₂, Nb₃S₄, Mo₃S₄, CoS₂, V₂O₅, CrO₃, V₃O₃, FeO₂, GeO₂, Li(Ni_{1/3}Mn_{1/3}Co_{1/3})O₂, Li(Ni_{1/3}Mn_{1/3}Co_{1/3})O₂, LiFePO₄ and the like may be used as well and, from the standpoint of the capacity density, it is particularly preferred to use Li(Ni_{0.5}Mn_{0.3}Co_{0.2})O₂, Li(Ni_{0.5}Mn_{0.2}Co_{0.3})O₂, Li(Ni_{0.6}Mn_{0.2}Co_{0.2})O₂, Li(Ni_{0.8}Mn_{0.1}Co_{0.1})O₂, or Li(Ni_{0.8}Co_{0.15}Al_{0.05})O₂.

### <4. Separator>

A separator is usually arranged between the positive electrode and the negative electrode for the purpose of inhibiting a short circuit. In this case, the separator is usually impregnated with the nonaqueous electrolytic solution.

The material and the shape of the separator are not particularly restricted as long as the separator does not markedly impair the effects of the present invention, and any known material and shape can be employed. Particularly, a separator formed from a material stable against the nonaqueous electrolytic solution of the present embodiment, such as a resin, a glass fiber or an inorganic material, can be used, and it is preferred to use a separator in the form of, for example, a porous sheet or nonwoven fabric that has excellent liquid retainability.

As the material of a resin or glass-fiber separator, for example, polyolefins such as polyethylene and polypropylene, polytetrafluoroethylenes, polyether sulfones, and glass filters can be used. Thereamong, glass filters and polyolefins are preferred, and polyolefins are more preferred. Any of these materials may be used singly, or two or more thereof may be used in any combination at any ratio.

The separator may have any thickness; however, the thickness is usually 1 µm or greater, preferably 5 µm or greater, more preferably 10 µm or greater, but usually 50 µm or less, preferably 40 µm or less, more preferably 30 µm or less. When the separator is thinner than this range, the insulation and the mechanical strength may be reduced. Meanwhile, when the separator is thicker than this range, not only the battery performance such as the rate characteristics may be deteriorated, but also the energy density of the nonaqueous electrolytic solution secondary battery as a whole may be reduced.

In cases where a porous material such as a porous sheet or a nonwoven fabric is used as the separator, the porosity of the separator may be set arbitrarily; however, it is usually 20% or higher, preferably 35% or higher, more preferably 45% or higher, but usually 90% or lower, preferably 85% or lower, more preferably 75% or lower. When the porosity is lower than this range, the membrane resistance is increased, and this tends to deteriorate the rate characteristics. Meanwhile, when the porosity is higher than this range, the mechanical strength and the insulation of the separator tend to be reduced.

The average pore size of the separator may also be set arbitrarily; however, it is usually 0.5 µm or smaller, preferably 0.2 µm or smaller, but usually 0.05 µm or larger. When the average pore size is larger than this range, a short circuit is likely to occur. Further, when the average pore size is smaller than this range, the membrane resistance is increased, and this may lead to deterioration of the rate characteristics.

Meanwhile, as the material of an inorganic separator, for example, an oxide such as alumina or silicon dioxide, a nitride such as aluminum nitride or silicon nitride, or a sulfate such as barium sulfate or calcium sulfate can be used, and the inorganic separator may be in the form of particles or fibers.

With regard to the form of the separator, a nonwoven fabric, a woven fabric, or a thin film such as a microporous film may be used. As a thin-film separator, one having a pore size of 0.01 to 1 µm and a thickness of 5 to 50 µm is preferably used. Aside from such an independent thin-film separator, a separator that is formed as, with the use of a resin binder, a composite porous layer containing particles of the above-described inorganic material on the surface layer of the positive electrode and/or the negative electrode, can be used. For example, on both sides of the positive electrode, a porous layer may be formed using alumina particles having a 90% particle size of smaller than 1 µm along with a fluorine resin as a binder.

### <5. Conductive Material>

The positive electrode and the negative electrode may contain a conductive material for improvement of their electrical conductivity. As the conductive material, any known conductive material can be used. Specific examples thereof include: metal materials, such as copper and nickel; and carbonaceous materials, such as graphites (e.g., natural graphites and artificial graphites), carbon blacks (e.g., acetylene black), and amorphous carbon (e.g., needle coke). Any of these conductive materials may be used singly, or two or more thereof may be used in any combination at any ratio.

The conductive material is used such that it is incorporated in an amount of usually not less than 0.01 parts by mass, preferably not less than 0.1 parts by mass, more preferably not less than 1 part by mass, but usually 50 parts by mass or less, preferably 30 parts by mass or less, more preferably 15 parts by mass or less, with respect to 100 parts by mass of the positive electrode material or the negative electrode material. When the content of the conductive material is lower than this range, the electrical conductivity may be insufficient. Meanwhile, when the content of the conductive material is higher than this range, the battery capacity may be reduced.

### <6. Binder>

The positive electrode and the negative electrode may contain a binder for improvement of their bindability. The binder is not particularly restricted as long as it is a material that is stable against the nonaqueous electrolytic solution and the solvent used in the electrode production.

When a coating method is employed, the binder may be any material that is dissolved or dispersed in the liquid medium used in the electrode production, and specific examples of such a binder include: resin-based polymers, such as polyethylene, polypropylene, polyethylene terephthalate, polymethyl methacrylate, aromatic polyamides, cellulose, and nitrocellulose; rubbery polymers, such as SBR (styrene-butadiene rubbers), NBR (acrylonitrile-butadiene rubbers), fluororubbers, isoprene rubbers, butadiene rubbers, and ethylene-propylene rubbers; thermoplastic elastomeric polymers, such as styrene-butadiene-styrene block copolymers and hydrogenation products thereof, EPDM (ethylene-propylene-diene terpolymers), styrene-ethylene-butadiene-ethylene copolymers, styrene-isoprene-styrene block copolymers, and hydrogenation products thereof; soft resinous polymers, such as syndiotactic 1,2-polybutadiene, polyvinyl acetate, ethylene-vinyl acetate copolymers, and propylene-*α*-olefin copolymers; fluorine-based polymers, such as polyvinylidene fluoride (PVdF), polytetrafluoroethylene, fluorinated polyvinylidene fluoride, and polytetrafluoroethylene-ethylene copolymers; and polymer compositions having ionic conductivity for alkali metal ions (particularly lithium ions). Any of these substances may be used singly, or two or more thereof may be used in any combination at any ratio.

The ratio of the binder is usually 0.1 parts by mass or higher, preferably 1 part by mass or higher, more preferably 3 parts by mass or higher, but usually 50 parts by mass or lower, preferably 30 parts by mass or lower, more preferably 10 parts by mass or lower, still more preferably 8 parts by mass or lower, with respect to 100 parts by mass of the positive electrode material or the negative electrode material. When the ratio of the binder is in this range, the bindability of each electrode can be sufficiently maintained, so that the mechanical strength of the electrode can be ensured, which is preferred from the standpoints of the cycle characteristics, the battery capacity, and the electrical conductivity.

### <7. Liquid Medium>

The type of the liquid medium used for the formation of a slurry is not particularly restricted as long as it is a solvent that is capable of dissolving or dispersing the active substances, the conductive material and the binder as well as a thickening agent used as required, and either an aqueous solvent or an organic solvent may be used.

Examples of the aqueous medium include water, and mixed media of alcohol and water. Examples of the organic medium include: aliphatic hydrocarbons, such as hexane; aromatic hydrocarbons, such as benzene, toluene, xylene, and methylnaphthalene; heterocyclic compounds, such as quinoline and pyridine; ketones, such as acetone, methyl ethyl ketone, and cyclohexanone; esters, such as methyl acetate and methyl acrylate; amines, such as diethylenetriamine and N,N-dimethylaminopropylamine; ethers, such as diethyl ether and tetrahydrofuran (THF); amides, such as N-methylpyrrolidone (NMP), dimethylformamide, and dimethylacetamide; and aprotic polar solvents, such as hexamethylphosphoramide and dimethyl sulfoxide. Any of these media may be used singly, or two or more thereof may be used in any combination at any ratio.

### <8. Thickening Agent>

When an aqueous medium is used as the liquid medium for the formation of a slurry, it is preferred to prepare a slurry using a thickening agent and a latex such as a styrene-butadiene rubber (SBR). The thickening agent is usually used for the purpose of adjusting the viscosity of the resulting slurry.

The thickening agent is not particularly restricted as long as it does not markedly limit the effects of the present invention, and specific examples of the thickening agent include carboxymethyl cellulose, methyl cellulose, hydroxymethyl cellulose, ethyl cellulose, polyvinyl alcohol, oxidized starch, phosphorylated starch, casein, and salts thereof. Any of these thickening agents may be used singly, or two or more thereof may be used in any combination at any ratio.

In cases where a thickening agent is used, the amount thereof is usually not less than 0.1 parts by mass, preferably not less than 0.5 parts by mass, more preferably not less than 0.6 parts by mass, but usually 5 parts by mass or less, preferably 3 parts by mass or less, more preferably 2 parts by mass or less, with respect to 100 parts by mass of the positive electrode material or the negative electrode material. When the amount of the thickening agent is less than this range, the coatability may be markedly reduced, while when the amount of the thickening agent is greater than this range, a reduction in the ratio of the active substance in an active substance layer may cause a reduction in the battery capacity and an increase in the resistance between the active substance particles.

### <9. Current Collector>

The material of the current collector is not particularly restricted, and any known material can be used. Specific examples thereof include: metal materials, such as aluminum, stainless steel, nickel-plated steel, titanium, tantalum, and copper; and carbonaceous materials, such as carbon cloth and carbon paper. Thereamong, a metal material, particularly aluminum, is preferred.

When the current collector is a metal material, the current collector may have any shape of, for example, a metal foil, a metal cylinder, a metal coil, a metal sheet, a metal thin film, an expanded metal, a punched metal, and a foamed metal and, when the current collector is a carbonaceous material, examples thereof include a carbon sheet, a carbon thin film, and a carbon cylinder. Thereamong, the current collector is preferably a metal thin film. As appropriate, the current collector may be in the form of a mesh.

The current collector may have any thickness; however, the thickness is usually 1 µm or greater, preferably 3 µm or greater, more preferably 5 µm or greater, but usually 1 mm or less, preferably 100 µm or less, more preferably 50 µm or less. When the thickness of the thin film is in this range, a sufficient strength required as a current collector is maintained, and this is also preferred from the standpoint of the ease of handling.

### <10. Battery Design>

### [Electrode Group]

An electrode group may have either a layered structure in which the above-described positive electrode plate and negative electrode plate are layered with the above-described separator being interposed therebetween, or a wound structure in which the above-described positive electrode plate and negative electrode plate are spirally wound with the above-described separator being interposed therebetween. The volume ratio of the electrode group with respect to the internal volume of the battery (this volume ratio is hereinafter referred to as "electrode group occupancy") is usually 40% or higher, preferably 50% or higher, but usually 90% or lower, preferably 80% or lower. When the electrode group occupancy is lower than this range, the battery has a small capacity. Meanwhile, when the electrode group occupancy is higher than this range, since the void space is small, there are cases where an increase in the battery temperature causes swelling of members and increases the vapor pressure of the electrolyte liquid component, as a result of which the internal pressure is increased to deteriorate various properties of the battery, such as the charge-discharge repeating performance and the high-temperature storage characteristics, and to activate a gas release valve for relieving the internal pressure to the outside.

### [Current Collector Structure]

The current collector structure is not particularly restricted; however, in order to more effectively realize an improvement in the discharge characteristics attributed to the nonaqueous electrolytic solution used in the present embodiment, it is preferred to adopt a structure that reduces the resistance of wiring and joint parts. By reducing the internal resistance in this manner, the effects of using the nonaqueous electrolytic solution used in the present embodiment are particularly favorably exerted.

In an electrode group having the above-described layered structure, the metal core portions of the respective electrode layers are preferably bundled and welded to a terminal. When the area of a single electrode is large, the internal resistance is high; therefore, it is also preferred to reduce the resistance by arranging plural terminals in each electrode. In an electrode group having the above-described wound structure, the internal resistance can be reduced by arranging plural lead structures on each of the positive electrode and the negative electrode and bundling them to a terminal.

### [Protective Element]

Examples of a protective element include a PTC (Positive Temperature Coefficient) element whose resistance increases in the event of abnormal heat generation or excessive current flow, a thermal fuse, a thermistor, and a valve (current cutoff valve) that blocks a current flowing into a circuit in response to a rapid increase in the internal pressure or internal temperature of the battery in the event of abnormal heat generation. The protective element is preferably selected from those that are not activated during normal use at a high current and, from the standpoint of attaining a high output, it is more preferred to design the battery such that neither abnormal heat generation nor thermal runaway occurs even without a protective element.

### [Outer Package]

The nonaqueous electrolytic solution secondary battery of the present embodiment is usually constructed by housing the above-described nonaqueous electrolytic solution, negative electrode, positive electrode, separator and the like in an outer package. This outer package is not restricted, and any known outer package can be employed as long as it does not markedly impair the effects of the present invention.

The material of the outer package is not particularly restricted as long as it is a substance that is stable against the nonaqueous electrolytic solution used in the present embodiment. Specifically, for example, a metal such as a nickel-plated iron (nickel-plated steel sheet), stainless steel, aluminum or an alloy thereof, nickel, titanium, or a magnesium alloy, or a laminated film composed of a resin and an aluminum foil is usually used. From the standpoint of weight reduction, it is preferred to use a metal such as aluminum or an aluminum alloy, or a laminated film.

Examples of an outer package using any of the above-described metals include those having a hermetically sealed structure obtained by welding metal pieces together by laser welding, resistance welding or ultrasonic welding, and those having a caulked structure obtained using the above-described metals via a resin gasket. Examples of an outer casing using the above-described laminated film include those having a hermetically sealed structure obtained by heat-fusing resin layers together. In order to improve the sealing performance, a resin different from the resin used in the laminated film may be interposed between the resin layers. Particularly, in the case of forming a sealed structure by heat-fusing resin layers via a collector terminal, since it involves bonding between a metal and a resin, a polar group-containing resin or a resin modified by introduction of a polar group is preferably used as the resin to be interposed.

Further, the shape of the outer package is selected arbitrarily, and the outer package may have any of, for example, a cylindrical shape, a prismatic shape, a laminated shape, a coin shape, and a large-sized shape. Accordingly, the shape of the nonaqueous electrolytic solution secondary battery of the present embodiment is not particularly restricted and may be any of, for example, a cylindrical shape, a prismatic shape, a laminated shape, a coin shape, and a large-sized shape.

### EXAMPLES

The present invention will now be described more concretely by way of Examples and Comparative Examples; however, the present invention is not restricted thereto within the gist of the present invention.

### [Production of Negative Electrode]

### (Examples 1 to 9 and Comparative Examples 1 to 5 and 8 to 13)

As a negative electrode active substance, a mixture of a graphite and SiOx (x = 1, purity = 99.90% or higher, manufactured by OSAKA Titanium Technologies Co., Ltd.)) was used. The graphite and the SiOx were mixed such that the resulting mixture had a SiOx content of 5.0% by mass with respect to a total amount of the graphite and the SiOx. To 94 parts by mass of this mixture, 3 parts by mass of an aqueous dispersion of sodium carboxymethyl cellulose and 3 parts by mass of an aqueous dispersion of carbon black were added as a thickening agent and a binder, respectively, and these materials were mixed using a disperser to prepare a slurry. A 10 µm-thick copper foil was coated with the thus obtained slurry, and this copper foil was dried and then roll-pressed using a press machine, after which the resultant was cut out into a shape having an active substance layer of 32 mm in width and 42 mm in length and an uncoated part of 5 mm in width and 9 mm in length, whereby a negative electrode was produced.

### (Comparative Examples 6 and 7)

A negative electrode was produced such that the negative electrode active substance had a SiOx content of 15.0% by mass with respect to a total amount of a graphite and a SiOx.

### (Comparative Example 14)

A negative electrode was produced such that the negative electrode active substance had a Si content of 5.0% by mass with respect to a total amount of a graphite and Si nanoparticles (purity = 98%, manufactured by Sigma-Aldrich Co., LLC.).

### [Production of Positive Electrode]

A slurry was prepared by mixing 85 parts by mass of Li (Ni_{1/3}Mn_{1/3}Co_{1/3})O₂ (LNMC) as a positive electrode active substance, 10 parts by mass of carbon black as a conductive material and 5 parts by mass of polyvinylidene fluoride (PVdF) as a binder in an *N*-methylpyrrolidone solvent. One side of a 15 µm-thick aluminum foil was coated with the thus obtained slurry, and this aluminum foil was dried and then roll-pressed using a press machine, after which the resultant was cut out into a shape having an active substance layer of 30 mm in width and 40 mm in length and an uncoated part of 5 mm in width and 9 mm in length, whereby a positive electrode was produced.

### (Examples 1 to 9 and Comparative Examples 1 to 14)

### [Preparation of Electrolytic Solutions]

Under a dry argon atmosphere, dried LiPF₆ was dissolved in a mixture of ethylene carbonate (EC), dimethyl carbonate (DMC) and ethyl methyl carbonate (EMC) (volume ratio = 30:30:40) at a ratio of 1 mol/L to prepare an electrolytic solution as a basic electrolytic solution. The compounds shown below were each added to this basic electrolytic solution in the respective amounts (% by mass) shown in Table 1 to prepare electrolytic solutions. In Table 1, although the Si atom-containing active substance used in the negative electrode of Comparative Example 13 does not correspond to the active substance (A), the content thereof in the negative electrode is shown in the column of "Active substance (A)".

### <Compounds>

The compounds that were used in Examples and Comparative Examples are as follows.
Compound (1)-1: tris(2,2,2-trifluoroethyl) phosphate 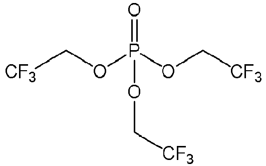
Compound (1)-2: tris(2,2,2-trifluoroethyl) phosphite 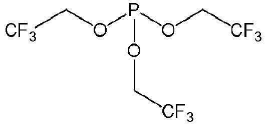
Compound 2: vinylene carbonate 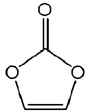
Compound A: 1,3-bis(isocyanatomethyl) cyclohexane 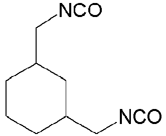
Compound B: lithium fluorosulfonate 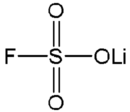
Compound C: trimethylvinylsilane 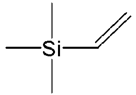
Compound X: triphenyl phosphate 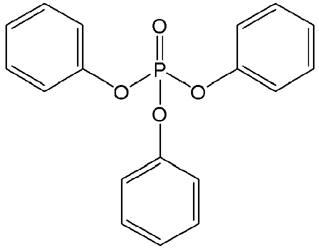
Compound Y: tris(trimethylsilyl) borate 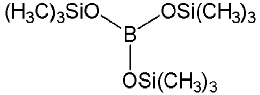
Compound Z: bis(trimethylsilyl) malonate

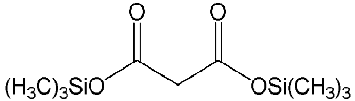

### [Production of Lithium Secondary Battery]

A battery element was prepared by laminating the above-obtained positive electrode and negative electrode along with a polyethylene separator in the order of the negative electrode, the separator, and the positive electrode. This battery element was inserted into a pouch made of a laminated film obtained by coating both sides of an aluminum sheet (thickness: 40 µm) with a resin layer, with the terminals of the positive and negative electrodes protruding out of the pouch. Thereafter, the above-prepared electrolytic solution was injected into the pouch, and the pouch was subsequently vacuum-sealed, whereby a sheet-form battery of Example 1, which would be brought into a fully-charged state at 4.2 V, was produced.

### [Evaluation of Cycle Characteristics]

For a new battery that had not been subjected to a charge-discharge cycle, a single set of charging and discharging was performed at 25°C in a voltage range of 4.2 V to 2.5 V with a current value of 1/6 C (a current value at which the rated capacity based on the hourly discharge capacity is discharged in one hour is defined as 1 C; the same applies below), and the battery was subsequently charged to 4.1 V, heat-treated at 60°C for 12 hours, and then further charged and discharged once at 25°C in a voltage range of 4.2 V to 2.5 V with a current value of 1/6 C. Thereafter, the battery was charged and discharged once at 45°C in a voltage range of 4.2 V to 2.5 V with a current value of 0.1 C and thereby stabilized. The thus stabilized battery was then subjected to repeated charge-discharge cycles at 45°C in a voltage range of 4.2 V to 2.5 V with a current value of 1 C, and the cycle capacity retention rate (%) was determined by the following equation: [(Discharge capacity of 99th cycle)/(Discharge capacity of first cycle)] × 100. The results thereof are shown in Table 1.

### [Evaluation of Output Characteristics (Post-Cycle Resistance Characteristics)]

The battery which had been subjected to 99 charge-discharge cycles was charged at 25°C with a constant current of 1/6 C such that the battery had a half of the initial discharge capacity. This battery was discharged at each current value of 0.5 C, 1.0 C, 1.5 C, 2.0 C and 2.5 C at 25°C, and the voltage was measured at a point of 2 seconds into each discharging process. The resistance value (Ω) was determined from the slope of a current-voltage straight line, and the current value (A) generating a voltage of 3,000 mV was calculated to determine the output (W) at 3,000 mV.

### [Evaluation of Battery Swelling (Volume Change During Cycles)]

The mass of the battery was measured in a state where the battery was immersed in ethanol, and the buoyancy of the battery was determined from the difference between the thus measured mass and the actual mass, after which the buoyancy value was divided by the density of ethanol to determine the volume of the battery. This operation was performed both before the start of the charge-discharge test and after 99 charge-discharge cycles, and the battery swelling (µL) during the cycles was determined from the difference between the volume after the 99 charge-discharge cycles and the volume before the charge-discharge test [(Volume after 99-cycle test) - (Volume before charge-discharge test)]. The results thereof are shown in Table 1.

### [Table 1]

**Table 1**

| | Non aqueous electrolytic solution | | | | | | Negative electrode | | | | Evaluation | | |
|---|---|---|---|---|---|---|---|---|---|---|---|---|---|
| | Compound (1) | | Unsaturated bond-containing carbonate | | Other additives | | Active substance (A) | | Active substance (B) | | Cycle capacity retention rate (%) | Post-cycle battery swelling (µl) | Post-cycle output (W) |
| | Type | Content (% by mass) | Type | Content (% by mass) | Type | Content (% by mass) | Type | Content in the active substance (% by mass) | Type | Content in the active substance (% by mass) | | | |
| Example 1 | Compound(1)-1 | 0.50 | Compound2 | 0.40 | - | - | SiOx | 5.0 | Graphite | 95.0 | 91 | 56 | 2.2 |
| Example 2 | Compound(1)-1 | 1.70 | Compound2 | 0.40 | - | - | SiOx | 5.0 | Graphite | 95.0 | 91 | 54 | 2.1 |
| Example 3 | Compound(1)-1 | 3.00 | Compound2 | 0.40 | - | - | SiOx | 5.0 | Graphite | 95.0 | 91 | 46 | 2.2 |
| Example 4 | Compound(1)-1 | 0.10 | Compound2 | 0.40 | - | - | SiOx | 5.0 | Graphite | 95.0 | 90 | 53 | 2.0 |
| Example 5 | Compound(1)-1 | 10.00 | Compound2 | 0.40 | - | - | SiOx | 5.0 | Graphite | 95.0 | 90 | 56 | 2.0 |
| Example 6 | Compound(1)-2 | 0.50 | Compound2 | 0.40 | - | - | SiOx | 5.0 | Graphite | 95.0 | 90 | 44 | 2.2 |
| Example 7 | Campound(1)-1 | 1.70 | Compound2 | 0.40 | CompoundA | 0.25 | SiOx | 5.0 | Graphite | 95.0 | 91 | 13 | 1.9 |
| Example 8 | Compound(1)-1 | 1.70 | Compound2 | 0.40 | CompoundB | 0.5 | SiOx | 5.0 | Graphite | 95.0 | 90 | 36 | 2.3 |
| Example 9 | Compound(1)-1 | 1.70 | Compound2 | 0.40 | CompoundC | 0.5 | SiOx | 5.0 | Graphite | 95.0 | 90 | 31 | 2.1 |
| Comparative Example 1 | Compound(1)-1 | 0.05 | Compound2 | 0.40 | - | - | SiOx | 5.0 | Graphite | 95.0 | 89 | 108 | 2.0 |
| Comparative Example 2 | Compound(1)-1 | 20.00 | Compound2 | 0.40 | - | - | SiOx | 5.0 | Graphite | 95.0 | 86 | 98 | 1.1 |
| Comparative Example 3 | Compound(1)-1 | 1.70 | Compound2 | 0.10 | - | - | SiOx | 5.0 | Graphite | 95.0 | 89 | 90 | 2.0 |
| Comparative Example 4 | Compound(1)-1 | 1.70 | Compound2 | 10.00 | - | - | SiOx | 5.0 | Graphite | 95.0 | 92 | 80 | 1.0 |
| Comparative Example 5 | - | - | - | - | - | - | SiOx | 5.0 | Graphite | 95.0 | 90 | 140 | 2.1 |
| Comparative Example 6 | Compound(1)-1 | 20.00 | - | - | - | - | SiOx | 15.0 | Graphite | 85.0 | 72 | 112 | 0.4 |
| Comparative Example 7 | Compound(1)-1 | 3.00 | Compound2 | 0.40 | - | - | SiOx | 15.0 | Graphite | 85.0 | 77 | 66 | 0.7 |
| Comparative Example 8 | Compound(1)-2 | 20.00 | Compound2 | 0.40 | - | - | SiOx | 5.0 | Graphite | 95.0 | 79 | 118 | 0.7 |
| Comparative Example 9 | Compound(1)-2 | 0.01 | Compound2 | 0.40 | - | - | SiOx | 5.0 | Graphite | 95.0 | 90 | 82 | 1.9 |
| Comparative Example 10 | - | - | Compound2 | 0.40 | CompoundX | 10.0 | SiOx | 5.0 | Graphite | 95.0 | 89 | 49 | 1.4 |
| Comparative Example 11 | - | - | Compound2 | 0.40 | CompoundY | 10.0 | SiOx | 5.0 | Graphite | 95.0 | 84 | 94 | 0.7 |
| Comparative Example 12 | - | - | Compound2 | 0.40 | CompoundZ | 3.0 | SiOx | 5.0 | Graphite | 95.0 | 91 | 464 | 2.1 |
| Comparative Example 13 | Compound(1)-1 | 3.00 | Compound2 | 0.40 | - | - | Si | 5.0 | Graphite | 95.0 | 26 | 171 | 0.4 |

As apparent from Table 1 above, it is seen that the batteries produced in Examples 1 to 9 had superior inhibition of battery swelling than the batteries of Comparative Examples 1 to 6, 8, 9 and 11 to 13. It is also seen that the batteries produced in Examples 1 to 9 each had a higher retention rate and a larger output, namely superior cycle characteristics and output characteristics, than the batteries of Comparative Examples 6, 7, 8 and 13. In addition, it is seen that the batteries produced in Examples 1 to 9 had an improved output as compared to the battery of Comparative Example 10. As seen from Examples 1 to 5 and Comparative Examples 1 and 2, when a nonaqueous electrolytic solution containing the compound (1) in an amount of less than a specific range was used, the battery swelling was not inhibited, while when a nonaqueous electrolytic solution containing the compound (1) in an amount of greater than a specific range was used, not only the retention rate and the output were reduced but also the battery swelling was not inhibited. Specifically, in Examples 1 to 5, the battery swelling was reduced to about 41% to about 52% of Comparative Example 1. In addition, in Examples 1 to 5, the post-cycle output was 2.0 to 2.2 times larger and the battery swelling was reduced to about 45% to about 57%, as compared to Comparative Example 2. Meanwhile, as seen from Example 2 and Comparative Examples 3 and 4, when a nonaqueous electrolytic solution containing an unsaturated bond-containing carbonate in an amount of less than a specific range was used, the battery swelling was increased and the retention rate and the output were both reduced, while when a nonaqueous electrolytic solution containing an unsaturated bond-containing carbonate in an amount of greater than a specific range was used, the battery swelling was increased and the output was reduced. Specifically, in Example 2, as compared to Comparative Example 3, the battery swelling was reduced to 60% while a balance of cycle characteristics and output characteristics was maintained. In addition, in Example 2, the post-cycle output was 2.1 times larger and the battery swelling was reduced to about 68%, as compared to Comparative Example 4. From the above, it is understood that, by using a combination of the compound (1) and an unsaturated bond-containing carbonate each in a specific amount range, a battery in which the retention rate and the output are well-balanced while swelling is inhibited can be obtained.

Further, as apparent from a comparison between Examples 3 and Comparative Example 7, it is seen that, even with the use of a nonaqueous electrolytic solution containing the compound (1) and an unsaturated bond-containing carbonate, the above-described effects are exerted only when the content of the negative electrode active substance (A) in the negative electrode is in a specific range.

Still further, comparing Example 3 and Comparative Example 13, the cycle capacity retention rate was 3.5 times higher, the post-cycle output was 5.5 times larger, and the battery swelling was reduced to about 26% in Example 3 as compared to Comparative Example 13. From these results, it was found that a nonaqueous secondary battery, which is markedly superior to a nonaqueous secondary battery provided with a negative electrode containing Si as an active substance in all of the inhibition of battery swelling, the cycle characteristics and the output characteristics, can be realized by using an electrolytic solution containing a combination of the compound (1) and an unsaturated bond-containing carbonate in combination with a negative electrode containing the active substance (A).

Moreover, as apparent from comparisons between Example 6 and Comparative Examples 8 and 9, it is seen that the same effects are attained as long as the compound (1) is a compound having the phosphate structure represented by Formula (1). In other words, it is understood that, in a nonaqueous electrolytic solution secondary battery that employs a Si atom-containing negative electrode, an excellent balance between the cycle characteristics and the output characteristics can be realized while markedly inhibiting swelling of the battery by incorporating both an unsaturated bond-containing carbonate and the compound (1) in specific amount ranges.

On the other hand, in Comparative Example 10 where a phosphate not corresponding to the compound (1) of the present invention was used, the retention rate and the output were both found to be poor.

Furthermore, as apparent from Examples 7 to 9, by additionally incorporating other specific additives, greater effects can be exerted, and the battery swelling and the output can be further improved.

In the above-described Examples and Comparative Examples shown in Table 1, the cycle test was conducted in a relatively short period as a model; however, significant differences were confirmed. The actual use of a nonaqueous electrolytic solution secondary battery may extend up to several years; therefore, it can be understood that the above-described differences in the results would be more prominent, assuming the use of each battery over a longer period of time.

This application is based on a Japanese patent application (Japanese Patent Application No. 2018-229156) filed on December 6, 2018, the entirety of which is hereby incorporated by reference.

### INDUSTRIAL APPLICABILITY

The nonaqueous electrolytic solution secondary battery of the present invention has an excellent balance of output characteristics and battery swelling while maintaining cycle characteristics. Therefore, the nonaqueous secondary battery of the present invention can be used in a variety of known applications . Specific examples of such applications include laptop computers, stylus computers, portable computers, electronic book players, mobile phones, portable fax machines, portable copiers, portable printers, headphone stereos, video cameras, liquid crystal TVs, handy cleaners, portable CD players, mini-disc players, transceivers, electronic organizers, calculators, memory cards, portable tape recorders, radios, back-up power supplies, motors, automobiles, motorcycles, motor-assisted bikes, bicycles, lighting equipment, toys, gaming machines, watches, power tools, strobe lights, cameras, household backup power sources, backup power sources for commercial use, load leveling power sources, power sources for storing natural energy, and lithium ion capacitors.

## Claims

1. A nonaqueous electrolytic solution secondary battery, comprising:
a nonaqueous electrolytic solution;
a negative electrode; and
a positive electrode,
wherein
the negative electrode contains Si atoms,
the nonaqueous electrolytic solution contains a nonaqueous solvent, a compound (1) represented by the following Formula (1), and an unsaturated bond-containing carbonate,
the content of the compound (1) with respect to the whole nonaqueous electrolytic solution is 0.07% by mass to 15.0% by mass,
the content of the unsaturated bond-containing carbonate with respect to the whole nonaqueous electrolytic solution is 0.2% by mass to 8.0% by mass, and
in the negative electrode, the ratio of an active substance (A) containing SiOx (0.5 ≤ x ≤ 1.6) with respect to all active substances is 9.0% by mass or lower: 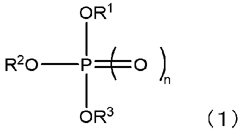 wherein, R¹ to R³ each independently represent a hydrogen atom, or a hydrocarbon group having 1 to 10 carbon atoms which optionally has a halogen atom; at least one of R¹ to R³ is a halogen atom-containing alkyl group having 1 to 10 carbon atoms; and n represents 0 or 1.

2. The nonaqueous electrolytic solution secondary battery according to claim 1, wherein, in Formula (1), R¹ to R³ are each independently a hydrogen atom, or a hydrocarbon group having 1 to 5 carbon atoms which optionally has a halogen atom.

3. The nonaqueous electrolytic solution secondary battery according to claim 1 or 2, wherein, in Formula (1), at least one of R¹ to R³ is a trifluoroethyl group or a 1,1,1,3,3,3-hexafluoro-2-propyl group.

4. The nonaqueous electrolytic solution secondary battery according to any one of claims 1 to 3, wherein the compound (1) is at least one selected from the group consisting of tris(2,2,2-trifluoroethyl) phosphate, tris(2,2,2-trifluoroethyl) phosphite, tris(1,1,1,3,3,3-hexafluoro-2-propyl) phosphate, and tris(1,1,1,3,3,3-hexafluoro-2-propyl) phosphite.

5. The nonaqueous electrolytic solution secondary battery according to any one of claims 1 to 4, wherein the unsaturated bond-containing carbonate is at least one selected from the group consisting of vinylene carbonate, 4,5-diphenylvinylene carbonate, 4,5-dimethylvinylene carbonate, and vinylethylene carbonate.

6. The nonaqueous electrolytic solution secondary battery according to any one of claims 1 to 5, wherein the nonaqueous electrolytic solution further contains at least one compound selected from the group consisting of diisocyanate compounds, F-S bond-containing lithium salts, and silane compounds.

7. The nonaqueous electrolytic solution secondary battery according to any one of claims 1 to 6, wherein
the negative electrode contains, as an active substance, an active substance (B) containing a carbon material as a main component, and
the content of the active substance (B) is 90.0% by mass to 99.9% by mass with respect to a total amount of the active substance (A) and the active substance (B).
